# EUROPÄISCHE PATENTSCHRIFT

(11) **EP 2 227 582 B1**
(45) Veröffentlichungstag und Bekanntmachung des Hinweises auf die Patenterteilung: **24.08.2011**
(21) Anmeldenummer: 08861307.0
(22) Anmeldetag: 28.11.2008
(51) Int. Cl.: D06F 58/20

(54) **WÄSCHETROCKNUNGSGERÄT MIT EINER WÄRMEPUMPE**
LAUNDRY DRYING DEVICE HAVING A HEAT PUMP
SÈCHE-LINGE DOTÉ D'UNE POMPE À CHALEUR

(30) Priorität: 18.12.2007 DE 102007061041
(43) Veröffentlichungstag der Anmeldung: 15.09.2010
(73) Patentinhaber: BSH Bosch und Siemens Hausgeräte GmbH, 81739 München (DE)
(72) Erfinder: STEFFENS, Günter, 14624 Dallgow-Döberitz (DE); STOLZE, Andreas, 14612 Falkensee (DE)
(86) Internationale Anmeldenummer: PCT/EP2008/066427
(87) Internationale Veröffentlichungsnummer: WO 2009/077308

(56) Entgegenhaltungen:
- DE-U- 1 827 021
- US-A1- 2005 072 022

## Beschreibung

Die Erfindung betrifft ein Wäschetrocknungsgerät mit einer Wärmepumpe.

Es sind Waschvolltrockner wie zum Beispiel aus der US-A-2005/072022 bekannt, die zur Reduzierung des Energieverbrauches beim Trocknen mit einer Kompressionswärmepumpe ausgerüstet sind. Dabei wird grundsätzlich die traditionell in Waschvolltrocknern eingesetzte Konstellation aus Wasserkondensation und Widerstandsheizung durch einen mit Kältemittel gefüllten geschlossenen Kältekreislauf mit Verdichter, Verdampfer, Verflüssiger und Drossel ersetzt. Aufgrund der eingeschränkten Bauraumsituation sind nur ganz bestimmte Anordnungen für den geschlossenen Kältekreislauf möglich, ohne die Gesamtgeräte-Abmessungen zu verändern.

Für einen Waschvolltrockner VA-1000 der japanischen Firma National ist eine Anordnung einer kompakten Einheit für den Kältekreislauf auf einer Bodenplatte, welche das Gehäuse des Waschvolltrockners nach unten abschließt, bekannt. Dabei ergeben sich folgende energetische Nachteile im Trocknungsprozess:

Die Luftwege vom Laugenbehälter zu den Wärmetauschern (Verdampfer, Verflüssiger) sind sehr lang. Dadurch kommt es auf dem Weg vom Laugenbehälter zum Verdampfer zu einer Vorkondensation der warmen und feuchten Prozessluft im Trocknungsprozess.

Durch diese Vorkondensation verringert sich die Pumpleistung innerhalb des Kältekreislaufes, da weniger Wasser pro Zeiteinheit am Verdampfer ausfällt und damit auch weniger Energie gepumpt werden kann. Weitere Verluste entstehen vom Verflüssiger bis zum Lufteintritt in die Trommel durch Wärmeverluste an den Kanalwandungen bis zum Eintritt in die Trommel.

Es ist die Aufgabe der vorliegenden Erfindung, einen Energieverbrauch eines Wäschetrocknungsgeräts mit Wärmepumpe ohne Vergrößerung seiner Außenabmessungen zu verringern.

Diese Aufgabe wird durch ein Wäschetrocknungsgerät nach Patentanspruch 1 gelöst. Vorteilhafte Ausgestaltungen sind insbesondere den abhängigen Ansprüchen entnehmbar.

Das Wäschetrocknungsgerät (insbesondere ein Waschvolltrockner oder ein separater Wäschetrockner) weist eine drehbare Wäschetrommel und eine Wärmepumpe mindestens mit einem Verdampfer, einem Verflüssiger, einem Verdichter und einer Drossel auf. Der Verdampfer ist zumindest teilweise, vorzugsweise vollständig, zwischen der Wäschetrommel und einer Rückwand angeordnet. Ferner ist der Verflüssiger zumindest teilweise, vorzugsweise vollständig, oberhalb der Wäschetrommel angeordnet.

Durch diese geschickte Anordnung von Verdampfer und Verflüssiger können Energieverluste minimiert werden. Es wird ein kurzer Weg der Prozessluft vom Verflüssiger in die Wäschetrommel ermöglicht. Insbesondere kommt es durch die räumliche Nähe des Verdampfers zum Luftaustritt aus der Trommel (Luftansaugöffnung) zu einer verbesserten Kondensation im Verdampfer, was erwünscht wird, da eine Kondensation in anderen Bereichen (z. B. der Trommel) einen Verlust an Pumpleistung mit sich führt. Nur der Phasenübergang im Verdampfer führt zu einer Rückgewinnung.

Vorzugsweise ist für den Fall, dass die Wäschetrommel von einem Trommelgehäuse umgeben ist, wie z. B. bei einem Waschvolltrockner, der Verdampfer zumindest teilweise zwischen einem Trommelgehäuse und einer Rückwand angeordnet; und der Verflüssiger ist zumindest teilweise oberhalb des Trommelgehäuses angeordnet.

Vorzugsweise ist der Verdampfer dazu eingerichtet, von unten nach oben mit Prozessluft durchströmt zu werden. Dann wird es besonders bevorzugt, wenn der Verdampfer oberhalb einer Prozessluftansaugöffnung der Wäschetrommel angeordnet ist und mit dieser über einen nach oben führenden Prozessluftkanal verbunden ist. Dadurch wird es bei einem Waschvolltrockner vermieden, dass Waschlauge an die meist mit Aluminiumlamellen bestückten Wärmetauscher (Verdampfer und Verflüssiger) gelangt, da die Anordnung von Verdampfer und Verflüssiger oberhalb des normalen Waschlaugenniveaus beim Waschen liegt. Ferner läuft Kondensat im Verdampfer zwangsläufig nach unten in den Kanalabschnitt (Fallleitung) zur Prozessluftansaugöffnung und kann so der Verflusung der Lamellen entgegenwirken, da das Kondensat-Wasser die Flusen und andere Ablagerungen nach unten mitreißt.

Es ist zur Verkürzung des Wegs zur Wäschetrommel bzw. zum Trommelgehäuse ferner vorteilhaft, wenn der Verflüssiger in einem vorderen Bereich des Wäschetrocknungsgeräts angeordnet ist. Dies ist insbesondere der Fall für Wäschetrocknungsgeräte mit einer Prozessluftzuführöffnung (bzw. -einblasöffnung) in die Wäschetrommel bzw das Trommelgehäuse im Bereich der Manschette.

Zur kompakten Bauweise ist es ferner vorteilhaft, wenn ein Prozessluftgebläse zwischen dem Verdampfer und dem Verflüssiger angeordnet ist, insbesondere seitlich versetzt vom Verflüssiger angeordnet ist.

Eine weitere Verbesserung der Energiebilanz wird vorteilhafterweise durch Einsatz einer Wäschetrommel bzw, eines Trommelgehäuses aus Kunststoff erreicht, insbesondere eines Laugenbehälters im Fall eines Waschvolltrockner, und zwar durch die dadurch verbesserte Wärmeisolation erreicht.

Eine noch weitere Verbesserung der Energiebilanz wird vorteilhafterweise mittels Vorsehens einer Isolation (z. B. einer Schicht aus Isoliermaterial) der Wäschetrommel bzw. des Trommelgehäuses, insbesondere Laugenbehälters, erreicht, z. B. von Außen.

Die obige Erfindung ist besonders vorteilhaft einsetzbar, falls das Wäschetrocknungsgerät ein Waschvolltrockner ist, wobei das Trommelgehäuse dann einem Laugenbehälter entspricht.

In dem folgenden Ausführungsbeispiel wird das Wärmepumpen-Wäschetrocknungsgerät anhand eines Ausführungsbeispiels schematisch näher erläutert. Gleiche oder gleichwirkende Komponenten sind zur besseren Übersichtlichkeit mit gleichen Bezugszeichen versehen.
- FIG 1: zeigt als Prinzipskizze eine Anordnung von Komponenten eines erfindungsgemäßen Wärmepumpen-Wäschetrocknungsgeräts;
- FIG 2: zeigt als Schnittdarstellung in Seitenansicht das Wärmepumpen-Wäschetrocknungsgerät aus FIG 1;
- FIG 3: zeigt als Schnittdarstellung in Draufsicht das Wärmepumpen-Wäschetrocknungsgerät aus FIG 2.
- FIG 4: zeigt als Prizipskizze ein bekanntes Wärmepumpen-Wäschetrocknungsgerät.

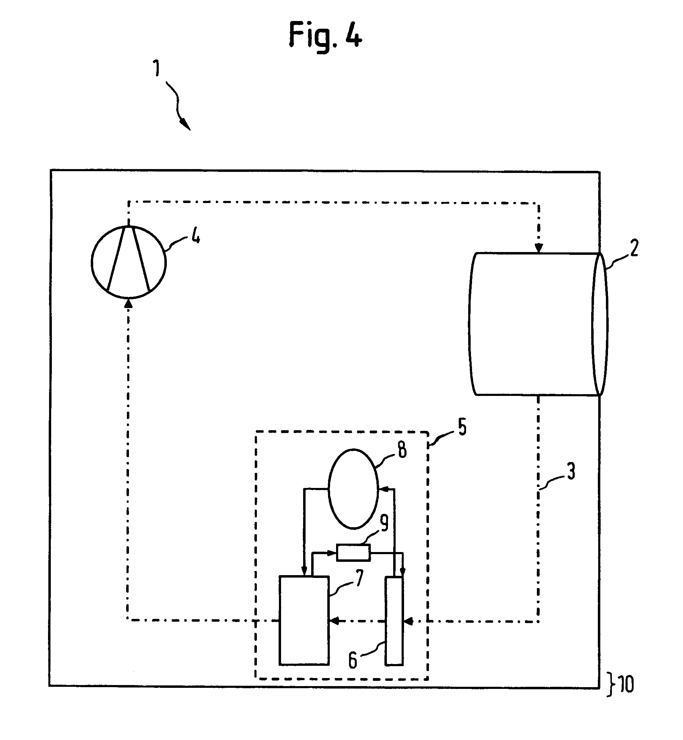

FIG 4 zeigt als Schemazeichnung einen Wärmepumpen-Waschvolltrockner 1 nach dem Stand der Technik, bei dem ein Laugenbehälter 2 mit darin drehbar gelagerter Wäschetrommel (ohne Abb.) an einen mit gestrichpunkteten Pfeilen angedeuteten Prozessluftkanal 3 angeschlossen ist. Die Prozessluft wird mittels eines in den Prozessluftkanal 3 eingekoppelten Gebläses 4 bewegt. Die beim Trocknen aus dem Laugenbehälter 2 angesaugte Prozessluft wird mittels einer Wärmepumpe 5 getrocknet und aufgewärmt und dann wieder in den Laugenbehälter 2 eingeblasen. Die Wirkweise einer Wärmepumpe 5 in einem Waschvolltrockner 1 ist grundsätzlich bekannt. Typischerweise umfasst die Wärmepumpe 5 einen Verdampfer 6, einen Verflüssiger 7, einen Verdichter 8 mit Kühlgebläse und eine Drossel 9, die in einen geschlossenen, mit Kältemittel befüllten Kreislauf eingebunden sind, der hier durch die durchgehenden Pfeile angedeutet ist. Während im Verdampfer 6 die feuchte Prozessluft abgekühlt und darin enthaltener Wasserdampf zumindest teilweise auskondensiert wird, wird im Verflüssiger 7 die trockene Luft wieder aufgewärmt und in den Laugenbehälter 2 geblasen. Bei der gezeigten Ausführungsform, wie sie von der japanischen Firma National bekannt ist, ist die Wärmepumpe 5 - wie angedeutet - als kompakte Einheit für den Kältekreislauf auf der Bodenplatte 10 des Waschvolltrockners 1 angeordnet. Dabei ergeben sich die bereits oben diskutierten energetischen Nachteile.

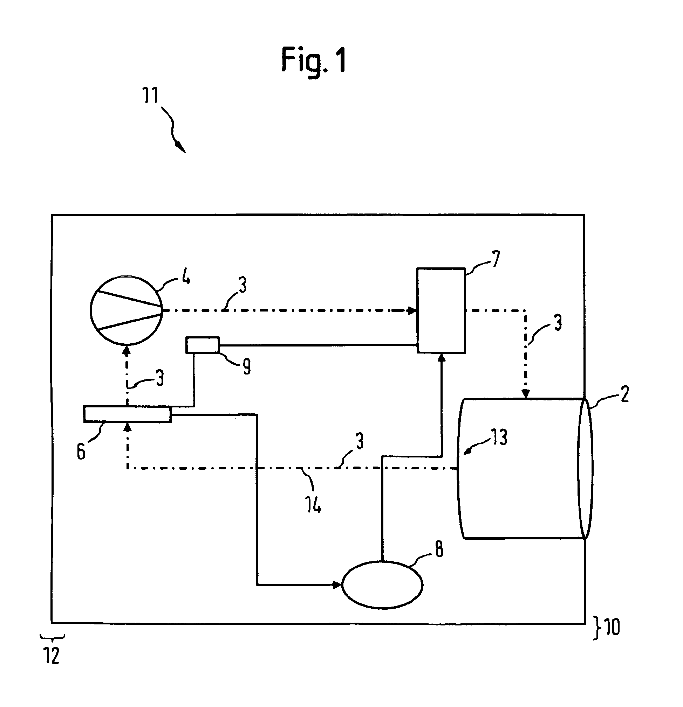

FIG 1 zeigt einen erfindungsgemäßen Wärmepumpen-Waschvolltrockner 11, bei dem nun der Verdampfer 6 zwischen dem Trommelgehäuse 2 und einer Rückwand 12 angeordnet ist und der Verflüssiger 7 oberhalb des Trommelgehäuses 2 angeordnet ist. Lediglich der Verdichter 8 ist noch im Bereich der Bodenplatte 10 angeordnet. Der Verdampfer 6 ist dazu eingerichtet und angeordnet, von unten nach oben mit Prozessluft durchströmt zu werden. Im Besonderen ist der Verdampfer 6 oberhalb einer Prozessluftansaugöffnung 13 des Laugenbehälters 2 angeordnet ist und mit diesem über einen zumindest teilweise nach oben führenden Abschnitt 14 des Prozessluftkanals 3 verbunden. Der Verflüssiger 7 ist nun in einem vorderen Bereich des Wäschetrocknungsgeräts 11 angeordnet, und das Prozessluftgebläse 4 zwischen dem Verdampfer 6 und dem Verflüssiger 7.

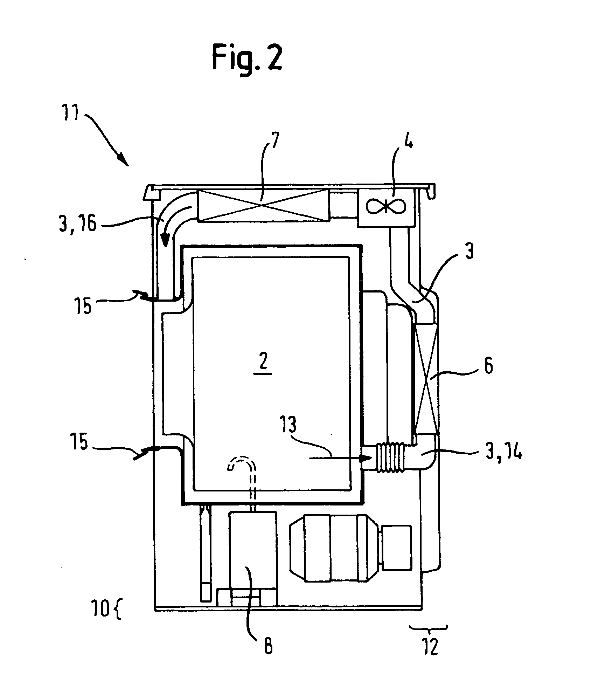

FIG 2 zeigt den erfindungsgemäßen Wärmepumpen-Waschvolltrockner 11 in Seitenansicht mit dem Verdampfer 6 rückwärtig des Trommelgehäuses angeordnet. Von der Prozessluftansaugöffnung 13 aus führt ein Prozessluftkanalabschnitt 14 nur kurz nach hinten und dann nach oben in den Verdampfer, und von dort weiter nach oben zum Gebläse 4. Vom Gebläse 4 aus wird die Prozessluft weiter nach vorne zum Verflüssiger 7 geblasen, und von dort aus in kurzem Weg zu einer am oberen Rand einer Manschette 15 in das Trommelgehäuse 2 Lufteinblasöffnung.

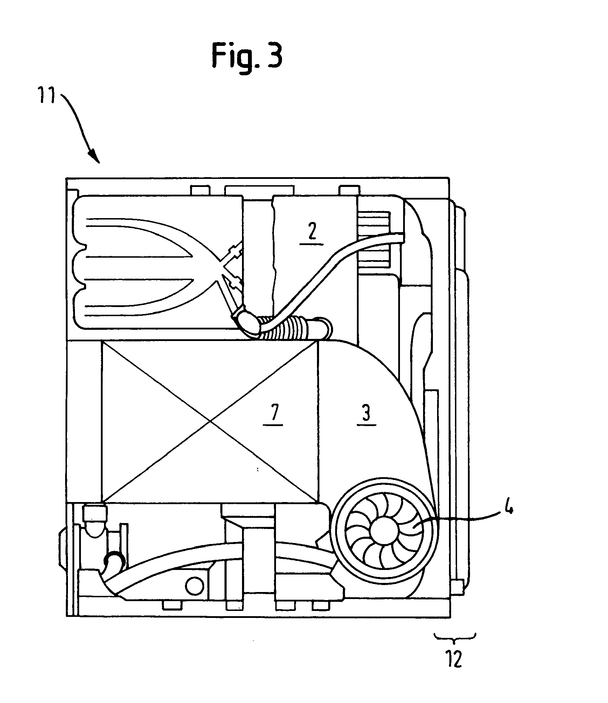

FIG 3 zeigt in Draufsicht die Lage des Prozessluftgebläses 4, dass über den Kanal 3 Prozessluft in den in einem vorderen Teil angeordneten Verflüssiger 7 bläst. Das Prozessluftgebläse 4 ist seitlich versetzt vom Verflüssiger angeordnet.

Selbstverständlich ist die vorliegende Erfindung nicht auf das beschriebene Ausführungsbeispiele beschränkt. So kann als Trocknungsgerät selbstverständlich auch ein separater Wäschetrockner verwendet werden, dabei kann die Wäschetrommel ohne zusätzliches Gehäuse im Gerät drehbar sein.

### Bezugszeichenliste

- 1: Wärmepumpen-Waschvolltrockner
- 2: Laugenbehälter
- 3: Prozessluftkanal
- 4: Prozessluftgebläse
- 5: Wärmepumpe
- 6: Verdampfer
- 7: Verflüssiger
- 8: Verdichter
- 9: Drossel
- 10: Bodenplatte
- 11: Wärmepumpen-Waschvolltrockner
- 12: Rückwand
- 13: Prozessluftansaugöffnung
- 14: Prozessluftkanalabschnitt
- 15: Manschette

## Patentansprüche

1. Wäschetrocknungsgerät (11), aufweisend eine Frontwand und eine Rückwand (12) sowie eine in einem zwischen der Frontwand und der Rückwand (12) befindlichen Laugenbehälter (2) angeordnete, drehbare Wäschetrommel, welche durch eine mit der Frontwand verbundene Manschette (15) zugänglich ist, und eine Wärmepumpe (5) mit einem Verdampfer (6) und einem Verflüssiger (7), **dadurch gekennzeichnet, dass**
- der Verdampfer (6) zumindest teilweise zwischen der Wäschetrommel und der Rückwand (12) angeordnet ist; und
- der Verflüssiger (7) zumindest teilweise oberhalb der Wäschetrommel angeordnet ist.

2. Wäschetrocknungsgerät (11) nach Anspruch 1, **dadurch gekennzeichnet, dass**
- der Verdampfer (6) zumindest teilweise zwischen dem Laugenbehälter (2) und der Rückwand (12) angeordnet ist; und
- der Verflüssiger (7) zumindest teilweise oberhalb des Laugenbehälters (2) angeordnet ist.

3. Wäschetrocknungsgerät (11) nach Anspruch 1 oder 2, **dadurch gekennzeichnet, dass** der Verdampfer (6) dazu eingerichtet ist, von unten nach oben mit Prozessluft durchströmt zu werden.

4. Wäschetrocknungsgerät (11) nach Anspruch 3, **dadurch gekennzeichnet, dass** der Verdampfer (6) oberhalb einer Prozessluftansaugöffnung (13) angeordnet ist und mit dieser über einen nach oben führenden Prozessluftkanal (3,14) verbunden ist.

5. Wäschetrocknungsgerät (11) nach einem der vorhergehenden Ansprüche, **dadurch gekennzeichnet, dass** der Verflüssiger (7) in einem vorderen Bereich des Wäschetrocknungsgeräts (11) angeordnet ist.

6. Wäschetrocknungsgerät (11) nach einem der vorhergehenden Ansprüche, **dadurch gekennzeichnet, dass** ein Prozessluftgebläse (4) zwischen dem Verdampfer (6) und dem Verflüssiger (7) angeordnet ist.

7. Wäschetrocknungsgerät (11) nach Anspruch 6, **dadurch gekennzeichnet, dass** das Prozessluftgebläse (4) seitlich versetzt vom Verflüssiger (7) angeordnet ist.

8. Wäschetrocknungsgerät (11) nach einem der vorhergehenden Ansprüche, **dadurch gekennzeichnet, dass** die Wäschetrommel und / oder der Laugenbehälter (2) Kunststoff als Grundmaterial umfassen.

9. Wäschetrocknungsgerät (11) nach einem der vorhergehenden Ansprüche, **dadurch gekennzeichnet dass** die Wäschetrommel und / oder der Laugenbehälter (2) eine Wärmeisolierung aufweisen.

10. Wäschetrocknungsgerät (11) nach Anspruch 9, **dadurch gekennzeichnet, dass** die Wärmeisolierung eine wärmeisolierende Schicht aufweist, welche die Wäschetrommel und / oder den Laugenbehälter (2) zumindest teilweise umgibt.

11. Wäschetrocknungsgerät (11) nach einem der vorhergehenden Ansprüche, **dadurch gekennzeichnet, dass** es ein Waschvolltrockner (11) ist.

## Claims

1. Laundry dryer (11) comprising a front wall and a rear wall (12) as well as a rotatable laundry drum, in which is arranged in a solution container (2) disposed between the front wall and the rear wall (12) and which is accessible via a sleeve (15) connected with the front wall, and a heat pump (5) with an evaporator (6) and a condenser (7), **characterised in that**
- the evaporator (6) is arranged at least partly between the laundry drum and the rear wall (12) and
- the condenser (7) is arranged at least partly above the laundry drum.

2. Laundry dryer (11) according to claim 1, **characterised in that**
- the evaporator (6) is arranged at least partly between the solution container (2) and the rear wall (12) and
- the condenser (7) is arranged at least partly above the solution container (2).

3. Laundry dryer (11) according to claim 1 or 2, **characterised in that** the evaporator (6) is equipped for the purpose of being flowed through from below in upward direction by process air.

4. Laundry dryer (11) according to claim 3, **characterised in that** the evaporator (6) is arranged above a process air induction opening (13) and is connected with this by way of a process air channel (3, 14) leading upwardly.

5. Laundry dryer (11) according to any one of the preceding claims, **characterised in that** the condenser (7) is arranged in a front region of the laundry dryer (11).

6. Laundry dryer (11) according to any one of the preceding claims, **characterised in that** a process air fan (4) is arranged between the evaporator (6) and the condenser (7).

7. Laundry dryer (11) according to claim 6, **characterised in that** that process air fan (4) is arranged to be laterally offset from the condenser (7).

8. Laundry dryer (11) according to any one of the preceding claims, **characterised in that** the laundry drum and/or the solution container (2) comprises or comprise plastics material as basic material.

9. Laundry dryer (11) according to any one of the preceding claims, **characterised in that** the laundry drum and/or the solution container (2) has or have a thermal insulation.

10. Laundry dryer (11) according to claim 9, **characterised in that** the thermal insulation has a thermally insulating layer which at least partly surrounds the laundry drum and/or the solution container (2).

11. Laundry dryer (11) according to any one of the preceding claims, **characterised in that** it is a combined washer-dryer (11).

## Revendications

1. Sèche-linge (11), présentant une paroi avant et une paroi arrière (12) ainsi qu'un tambour à linge rotatif, disposé dans un réservoir à lessive (2) se trouvant entre la paroi avant et la paroi arrière (12), lequel tambour est accessible par un manchon (15) relié à la paroi avant, et une pompe à chaleur (5) avec un évaporateur (6) et un liquéfacteur (7), **caractérisé en ce que**
- l'évaporateur (6) est disposé au moins en partie entre le tambour à linge et la paroi arrière (12) ; et
- le liquéfacteur (7) est disposé au moins en partie au-dessus du tambour à linge.

2. Sèche-linge (11) selon la revendication 1, **caractérisé en ce que**
- l'évaporateur (6) est disposé au moins en partie entre le réservoir à lessive (2) et la paroi arrière (12) ; et
- le liquéfacteur (7) est disposé au moins en partie au-dessus du réservoir à lessive (2).

3. Sèche-linge (11) selon la revendication 1 ou 2, **caractérisé en ce que** l'évaporateur (6) est aménagé pour être traversé du bas vers le haut avec de l'air de processus.

4. Sèche-linge (11) selon la revendication 3, **caractérisé en ce que** l'évaporateur (6) est disposé au-dessus d'une ouverture d'aspiration d'air de processus (13) et est relié à celle-ci au moyen d'un canal d'air de processus (3, 14) allant vers le haut.

5. Sèche-linge (11) selon l'une quelconque des revendications précédentes, **caractérisé en ce que** le liquéfacteur (7) est disposé dans une zone avant du Sèche-linge (11).

6. Sèche-linge (11) selon l'une quelconque des revendications précédentes, **caractérisé en ce qu'**une soufflerie d'air de processus (4) est disposée entre l'évaporateur (6) et le liquéfacteur (7).

7. Sèche-linge (11) selon la revendication 6, **caractérisé en ce que** la soufflerie d'air de processus (4) est disposée de façon décalée latéralement par rapport au liquéfacteur (7).

8. Sèche-linge (11) selon l'une quelconque des revendications précédentes, **caractérisé en ce que** le tambour à linge et/ou le réservoir à lessive (2) comprennent de la matière synthétique comme matériau de base.

9. Sèche-linge (11) selon l'une quelconque des revendications précédentes, **caractérisé en ce que** le tambour à linge et/ou le réservoir à lessive (2) présente(nt) une isolation thermique.

10. Sèche-linge (11) selon la revendication 9, **caractérisé en ce que** l'isolation thermique présente une couche thermo-isolante qui entoure au moins partiellement le tambour à linge et/ou le réservoir à lessive (2).

11. Sèche-linge (11) selon l'une quelconque des revendications précédentes, **caractérisé en ce qu'**il s'agit d'un lave-linge séchant intégrable (11).
